# DEMANDE DE BREVET EUROPEEN

(11) **EP 2 119 551 A1**
(43) Date de publication de la demande: **18.11.2009**
(21) Numéro de dépôt: 09159900.1
(22) Date de dépôt: 11.05.2009
(51) Int. Cl.: B29C 63/00

(54) **Système à outils multiples pour recouvrements de profils ou similaires**

(30) Priorité: 14.05.2008 ES 200801389
(71) Demandeur: Barberan Latorre, Jesús Francisco, 08860 Castelldefels (Barcelona) (ES)
(72) Inventeur: Barberan Latorre, Jesús Francisco, 08860 Castelldefels (Barcelona) (ES)
(74) Mandataire: Cabinet Plasseraud

(57) **Abrégé**

Système à outils multiples pour recouvrements de profils ou similaires, formé par des têtes tournantes (5, 6) qui comportent des rouleaux (7) divers pouvant être disposés sélectivement pour l'application de recouvrements sur des pièces (2) avec des configurations distinctes, les têtes (5 et 6) étant dans un montage susceptible de déplacement sur une structure de support (12), pour les placer en adéquation avec les pièces (2) à recouvrir.

## Description

### Domaine de l'invention

La présente invention concerne le recouvrement de profils ou similaires à base de bois ou similaire, par l'application d'une feuille superficielle esthétique, proposant un système à outils multiples pour réaliser l'opération de recouvrement d'une manière plus efficace et avantageuse.

### Etat de l'art

Les procédés traditionnels de recouvrement esthétique de profils, moulages ou panneaux, disposent d'un encolleur de la lame de recouvrement destinée à être fixée sur la pièce de base, et d'un système de rouleaux qui vont presser le recouvrement sur la pièce de base, pour l'adaptation aux formes de cette dernière de telle sorte qu'aucun pli, aucune poche d'air ou tout type d'imperfection ne soit produit pendant le recouvrement.

Dans les installations traditionnelles de cette fonction, il faut réaliser pour chaque type de pièce à recouvrir un procédé de pose et d'ajustement des rouleaux de pression, pour qu'ils mettent en pression la feuille d'une manière adaptée, étant donné que de cela dépend la bonne finition sans défauts du recouvrement, réalisant ladite pose des rouleaux par un procédé manuel, qui s'avère très lent et laborieux.

### Objet de l'invention

L'invention propose un système à outils multiples, par lequel il est possible d'automatiser le procédé de disposition des rouleaux de pression nécessaires pour exercer la pression sur les recouvrements des pièces à recouvrir.

Ce système faisant l'objet de l'invention est composé d'une structure de support sur laquelle sont montées des têtes dont partent des bras porteurs de rouleaux de divers types destinés à exercer la pression sur la lame intégrée dans les recouvrements.

Les têtes porteuses des rouleaux sont montées avec la possibilité de se déplacer sur la structure de support, pouvant être situées dans les positions nécessaires selon les pièces à recouvrir. La structure de support peut être commune pour les différentes têtes, pouvant déplacer les têtes en rapprochement ou en éloignement entre elles, mais ont peut également avoir des structures de support indépendantes pour les différentes têtes, les têtes pouvant ainsi se déplacer également en se croisant dans leurs déplacements, pour placer les têtes dans les positions appropriées.

Les rouleaux sont montés dans les têtes porteuses par l'intermédiaire d'un bras sustentateur associé à une roue tournante sur la tête correspondante, de telle sorte que par l'intermédiaire de la rotation de la roue il soit possible de sélectionner dans chaque tête le rouleau destiné à réaliser la pression de travail sur le recouvrement des pièces qui sont recouvertes.

De cette façon on obtient un système permettant de sélectionner et de disposer automatiquement les rouleaux de pression nécessaires dans chaque recouvrement à réaliser, sans que des interventions manuelles soient nécessaires pour le remplacement et l'ajustement des rouleaux à utiliser, obtenant ainsi un procédé beaucoup plus rapide des recouvrements et pratiquement sans main d'oeuvre nécessaire, ce qui s'avère favorable en matière de production et de coûts.

Pour ces raisons, ledit système à outils multiples faisant l'objet de l'invention présente des caractéristiques clairement avantageuses, adaptées à la fonction à laquelle il est destiné.

### Description des figures

La figure 1 est une représentation schématique d'un système conventionnel d'application d'une feuille de recouvrement sur une pièce de base.
La figure 2 est une représentation schématique du système à outils multiples faisant l'objet de l'invention pour l'application des recouvrements.

### Description détaillée de l'invention

L'objet de l'invention concerne un système à outils multiples pour l'application de lames de recouvrement externe sur des profils ou similaires, doté de caractéristiques techniques permettant d'automatiser la pose des rouleaux nécessaires pour exercer la pression d'adaptation du recouvrement sur la pièce de base qui est recouverte.

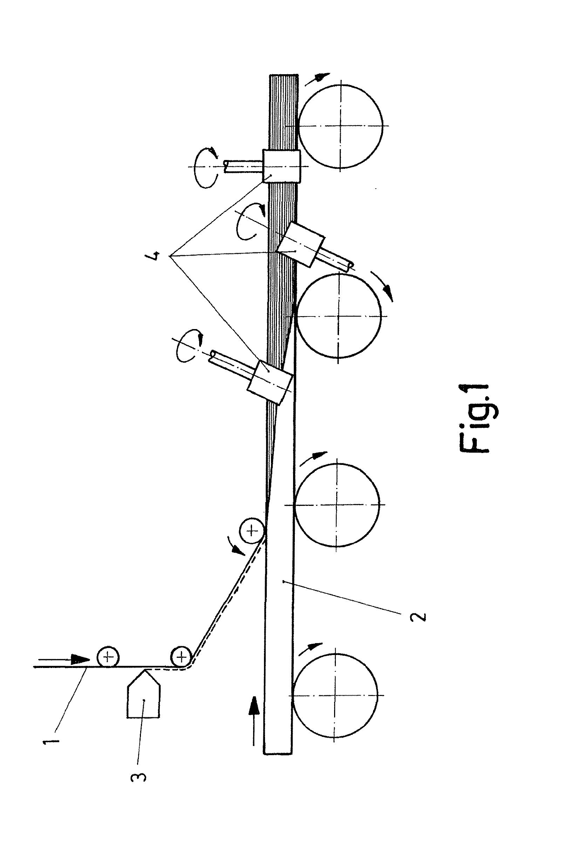

Ainsi que cela est illustré sur la figure 1, les procédés traditionnels utilisés pour l'application d'une feuille (1) de recouvrement sur une pièce de base (2), sont dotés d'un encolleur (3), qui imprègne avec l'adhésif nécessaire pour la fixation de la feuille (1) à appliquer, disposant d'une succession de rouleaux (4) agencés de façon appropriée pour mettre en pression la feuille (1) sur la pièce de base (2), afin d'adapter le recouvrement et que sa fixation soit parfaite.

Les rouleaux (4) de pression sur le recouvrement doivent être en rapport avec la forme de la pièce de base (2) à recouvrir, de telle sorte que pour chaque pièce de base (2) un jeu de rouleaux (4) est nécessaire, ceux-ci devant être remplacés et ajustés pour chaque recouvrement, ladite opération étant traditionnellement exécutée manuellement et par conséquent lente et coûteuse.

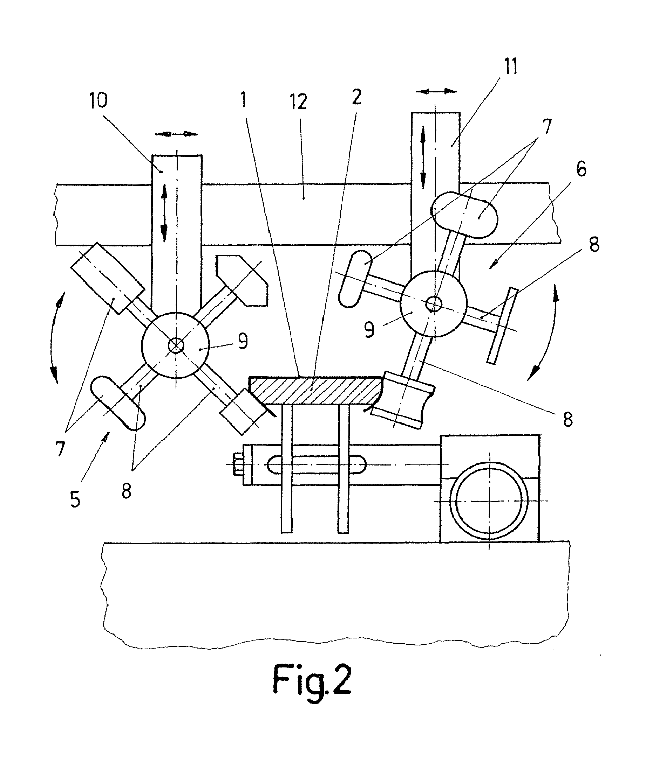

Le système à outils multiples de l'invention (figure 2) dispose de têtes (5, 6) porteuses de rouleaux (7) destinés à exercer la pression sur la feuille (1) d'application dans le procédé du recouvrement des pièces (2), de manière que dans chaque tête (5, 6) soit intégré au moins un rouleau (7) pour la fonction indiquée, et de manière préférable dans chaque tête (5, 6) est incorporé un jeu de rouleaux (7) multiples de diverses configurations.

Les rouleaux (7) sont montés dans les têtes correspondantes (5, 6), par l'intermédiaire de bras de sustentation (8) respectifs solidaires d'une roue (9) tournante, de telle sorte que par l'intermédiaire de la rotation de la roue (9) correspondante ils puissent être disposés dans la position de travail, pour réaliser la pression des recouvrements, quels que soient les rouleaux (7).

Les têtes (5, 6) sont montées pour leur part, par l'intermédiaire de supports (10, 11) correspondants, sur une structure (12) dans un montage susceptible de déplacement le long de ladite structure (12), pour placer les têtes (5, 6) dans les positions adéquates par rapport aux pièces (2) à recouvrir.

De cette façon, par l'intermédiaire du déplacement des supports (9, 10) les têtes (5, 6) sont placées dans les positions en adéquation avec la pièce (2) destinée à être recouverte, et par l'intermédiaire de la rotation des roues (9) les rouleaux (7) adaptés sont disposés en adéquation avec les formes de la pièce (2) sur lesquelles la pression doit être exercée, lesdits positionnements pouvant être établis en étant contrôlés par une commande automatique, moyennant quoi la disposition des rouleaux (7) pour la fonction des recouvrements s'avère rapide et précise.

Les têtes (5, 6) peuvent être montées sur une structure (12) commune, moyennant quoi par l'intermédiaire de leur déplacement les têtes (5, 6) peuvent s'éloigner et se rapprocher pour être situées dans les positions relatives par rapport aux pièces (2) d'application des recouvrements. De la même façon, chaque tête (5, 6) peut être montée sur une structure (12) indépendante, moyennant quoi les têtes (5, 6) peuvent également se croiser dans leurs déplacements, pour se situer indistinctement sur un côté ou l'autre des pièces (2) au besoin, pour les opérations des recouvrements.

## Revendications

1. Système à outils multiples pour recouvrements de profils ou similaires, du type qui applique une pression pour adapter la lame de recouvrement (1) sur la pièce de base (2) à recouvrir, **caractérisé en ce qu'**il comprend des têtes (5, 6) qui comportent des rouleaux (7) différents pour exercer la pression sur les recouvrements, lesdits rouleaux (7) étant montés dans les têtes (5, 6) correspondantes de façon tournante pour disposer sélectivement l'un quelconque des rouleaux (7) dans la position de travail selon les formes des pièces (2) à recouvrir, les têtes (5, 6) étant montées sur une structure de support (12) sur laquelle elles sont susceptibles de se déplacer pour les placer dans les positions en adéquation avec les pièces (2) à recouvrir.

2. Système à outils multiples pour recouvrements de profils ou similaires selon la revendication 1, **caractérisé en ce que** les têtes (5, 6) sont montées sur une structure de support (12) commune et peuvent être déplacées en rapprochement et en éloignement entre elles pour le placement par rapport aux pièces (2) à recouvrir.

3. Système à outils multiples pour recouvrements de profils ou similaires selon la revendication 1, **caractérisé en ce que** les têtes (5, 6) sont montées sur des structures de supports (12) indépendantes respectives, pouvant être déplacées en se croisant dans leurs déplacements pour leur placement par rapport aux pièces (2) à recouvrir.

4. Système à outils multiples pour recouvrements de profils ou similaires, selon l'une quelconque des revendications 1 à 3, **caractérisé en ce que** dans chaque tête (5, 6) sont montés plusieurs rouleaux (7) de diverses configurations, en montage sur une roue (9) tournante de la tête (5, 6) correspondante.
